# EUROPEAN PATENT SPECIFICATION

(11) **EP 2 217 117 B1**
(45) Date of publication and mention of the grant of the patent: **09.04.2014**
(21) Application number: 08859569.9
(22) Date of filing: 11.12.2008
(51) Int. Cl.: A47J 37/00, F24C 3/12

(54) **ENERGY EFFICIENT CHAR-BROILER**
ENERGIEEFFIZIENTER HOLZKOHLEROST
GRIL ÉCONOME EN ÉNERGIE

(30) Priority: 11.12.2007 US 7252 P
(43) Date of publication of application: 18.08.2010
(73) Proprietor: Garland Commercial Industries LLC, Freeland, PA 18224-1999 (US)
(72) Inventor: HARTER, David, W., New Port Richey FL 34654 (US); JONES, Douglas, S., New Port Richey FL 34654 (US)
(74) Representative: von Kreisler Selting Werner
(86) International application number: PCT/US2008/013572
(87) International publication number: WO 2009/075848

(56) References cited:
- EP-A2- 0 622 590
- GB-A- 2 182 137
- GB-A- 2 200 983
- US-A- 4 709 687
- US-A- 5 755 154
- US-A1- 2003 213 484
- US-A1- 2007 204 858
- US-B1- 6 786 225
- US-B2- 7 157 669

## Description

### BACKGROND OF THE INVENTION

### 1. Field of the Invention

The present invention relates generally to providing a charbroiler having energy efficient features. The present invention relates to a char-broiler that provides for evenly distributed heat throughout a grate cooking surface, efficient automatic spark ignition capability and thermostats having enhanced accuracy to control the grate cooking surface temperatures in adjacent cooking zones.

### 2. Description of Related Art

Char-broiler that are used in commercial applications often have inefficient operation due to the conditions in which they are used. Char-broilers are often used in restaurant kitchens for cooking meat and such. When the grate cooking surfaces of such broilers are improperly heated, problems can occur. When the grates are too hot, not only can food product be burned, but also gas fuel is wasted. Further, under-heating of the grills can pose health related concerns due to undercooked meat. Improper heating of the cooking surfaces of char-broiler ovens is often not the fault of the operator, but is often due to the instrumentation of such char-broilers. Frequently, the use of a manual valve for temperature adjustments makes accurate temperature control difficult for both large and small temperature adjustments for all burners in such a char-broiler. Such a char-broiler is described in US 2007/204858.

Accordingly, there is a need for a char-broiler that is capable of incorporating energy efficient features that ensure reduced fuel consumption, enhanced insulation for maintaining heat, maintain a burner flame and thermostatically controlled heating zones.

### SUMMARY OF THE INVENTION

The present disclosure provides, in larger embodiments, for at least two gas manifolds to enable half of the cooking surface of a char-broiler oven to be used at a single time to maximize energy conservation.

The present disclosure also provides for an enclosure and combustion panels that control the amount and location of the ingress room temperature air for combustion.

The present disclosure further provides for insulted side and back panels of the heating chamber to retain heat within the chamber and, to minimize heat loss through the sides and back of the chamber.

The present disclosure yet further provides for continuous spark ignition to all burners for reliable burner operation using an ignition control to sense the presence of a flame.

The present disclosure still yet further provides for an ignition system that has a safety feature that detects a flame and shuts off the gas if the presence of a flame is not detected.

The present disclosure yet still further provides for burners each having distributed porting along a lateral and longitudinal surface to more evenly deliver energy to a grate surface.

The present disclosure also provides for a cross lighting burner to ensure continuous burner ignition.

The present disclosure further provides for burners having different sized ports to ensure even distribution of heat laterally and longitudinally across the grate surface to ensure even cooking.

The present disclosure yet further provides for a modulating gas valve to reduce gas supplied to burners when a burner cover is in a closed position and a thermostat to control gas supply to burner when cover is in an opened position to conserve fuel.

The present invention also provides for thermostats to control the accuracy of temperature selection and enhance temperature control during cooking on top of cooking grate surface of a char-broiler.

A char-broiler for cooking a food product according to the invention has the features disclosed in claim 1.

### BRIEF DESCRIPTION OF THE DRAWINGS

Other and further benefits, advantages and features of the present disclosure will be understood by reference to the following specification in conjunction with the accompanying drawings, in which like reference characters denote like elements of structure.
Fig. 1 illustrates a perspective view of an exemplary char-broiler oven having two zones according to the present invention;
Fig. 2 illustrates a close-up view of the char-broiler oven of Fig. 1 showing the internal components;
Fig. 3 illustrates manifolds and valves associated with particular burners to provide left and right side cooking zones of the char-broiler of Fig. 1, according to the first embodiment of the present invention;
Fig. 4 illustrates the manifolds and valves in series that supply fuel to the left and right side cooking zones of the char-broiler according the second embodiment of Fig. 1 ;
Fig. 5 illustrates a single burner having varied burner port size and a distributed number of ports according to the present invention;
Fig. 6 illustrates a single burner having a combustion control air panel according to the present invention;
Fig. 7a illustrates burners and a spark mechanism according to the first embodiment of present invention;
Fig. 7b illustrates burners and cross lighting burner according to the second embodiment of the present invention of Fig. 1;
Fig. 8a illustrates a spark mechanism proximate burner ports, according to the first embodiment of the present invention;
Fig. 8b illustrates a spark mechanism proximate burner ports, according to the second embodiment of the present invention;
Figs. 9a-9c illustrate char-broiler covers in different positions to minimize the escape of heat; according to Fig. 1 of the present invention;
Fig. 10a and 10b illustrate expanded views of the thermostat controls according to the present invention;
Fig. 11 illustrates the present invention incorporating a gas modulating valve.
Fig. 12 illustrates the adjustable gas valves associated with each burner according to the present invention.

### DETAILED DESCRIPTION OF THE INVENTION

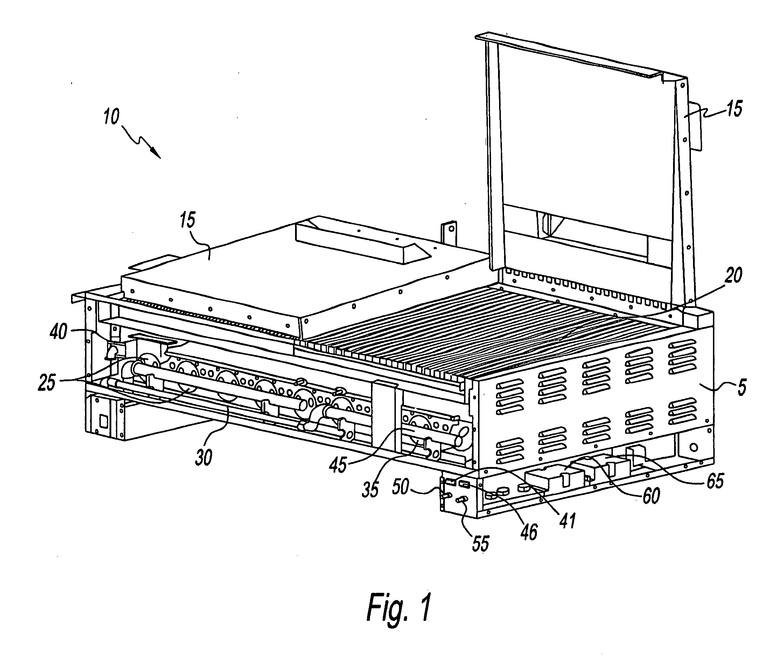

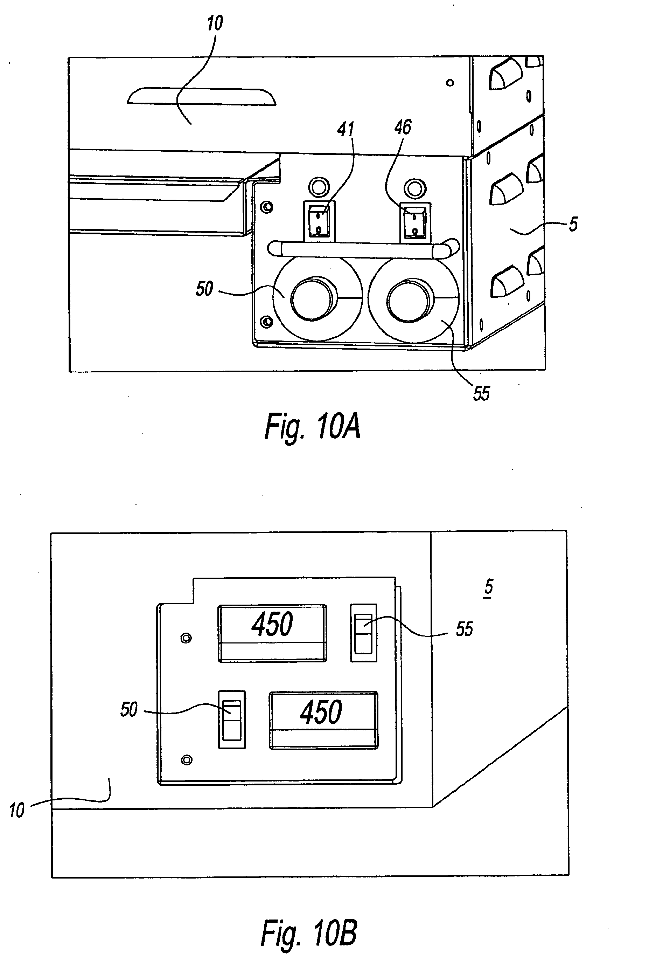

Referring to the drawings and, in particular, to Fig. 1, a char-broiler 10 is shown and generally referenced using reference numeral 10. Char-broiler 10 has two covers 15, and a plurality of burners 25. Char-broiler 10 has a manifold 30 and a manifold 35 and cooking zones 40 and 45. The temperature in each cooking zone 40 and 45 is maintained by thermostat controls 50 and 55, respectively. Thermostat controls 50, 55 can be either dials or digital controls as shown in Fig. 10. Each cooking zone 40 and 45 has a power switch 41 and 46 operatively associated therewith. Each cooking zone 40 and 45 also has an ignition control 60 and 65 coupled thereto. While Fig. 1 shows a broiler having two manifolds 30, 35 and two covers 15, broiler 10 could be either larger or smaller with more or fewer burners, manifolds and covers depending upon the needs of the user. Char-broiler 10 may vary in width from 24 inches to 72 inches and have a plurality of grate sections 20, with typically one grate section per burner. While Fig. 1 shows a plurality of burners 25, having a first plurality if burners associated with a first cooking zone 40 and a second plurality of burners associated with a second cooking zone 45, there could be more or fewer cooking zones and more or fewer burners depending upon the needs of the user.

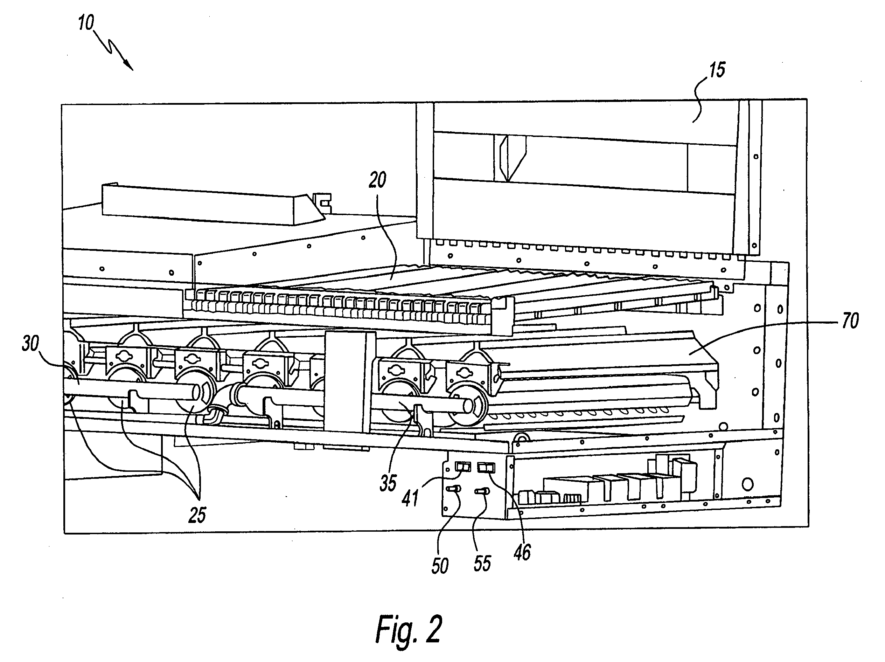

Referring to Fig. 2, char-broiler 10 is shown in more detail showing the inner components. Char-broiler 10. also has a plurality of radiants 70 disposed above the plurality of burners 25. A radiant is a piece of typically metal, preferably cast iron, that helps distribute the burner flame pattern, protect the burner from drippings and food particles and provide radiant heat to the grate and foods. The properties of the metal of radiant 70 ensure even heat distribution from burners for evenly cooked foods.

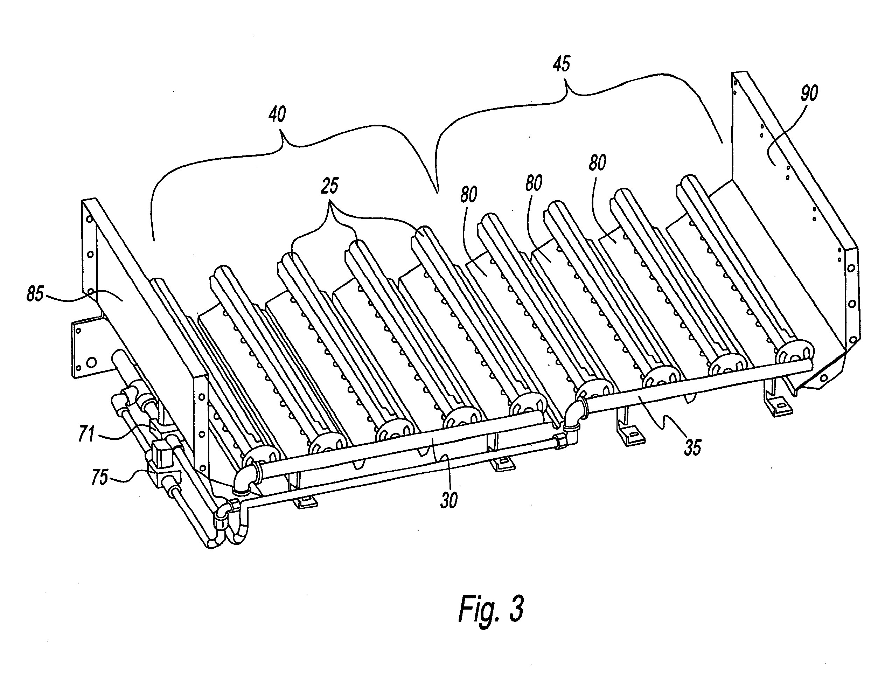

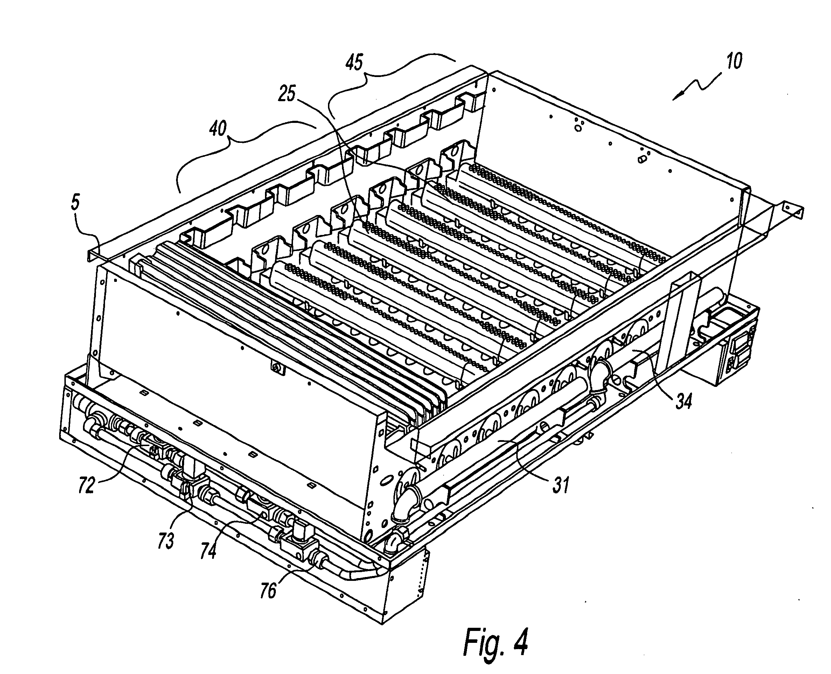

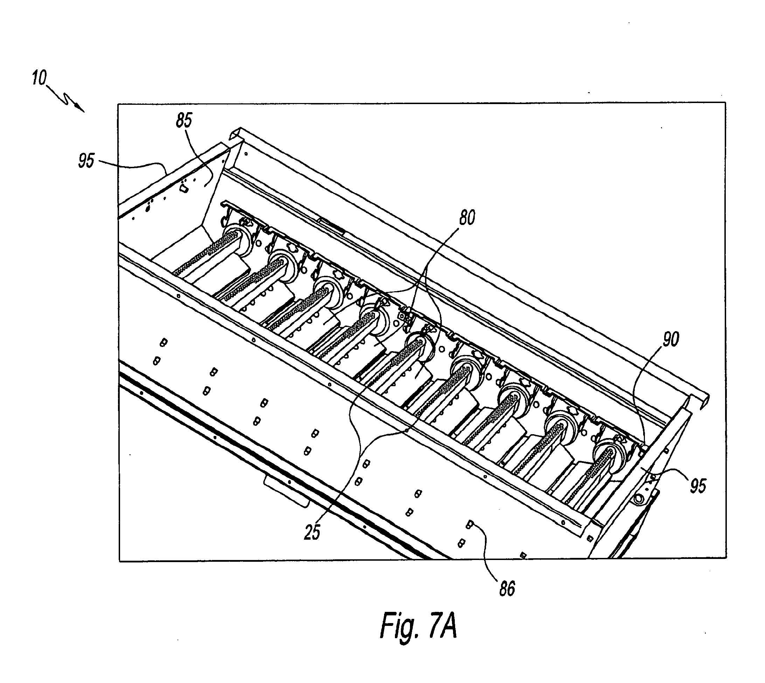

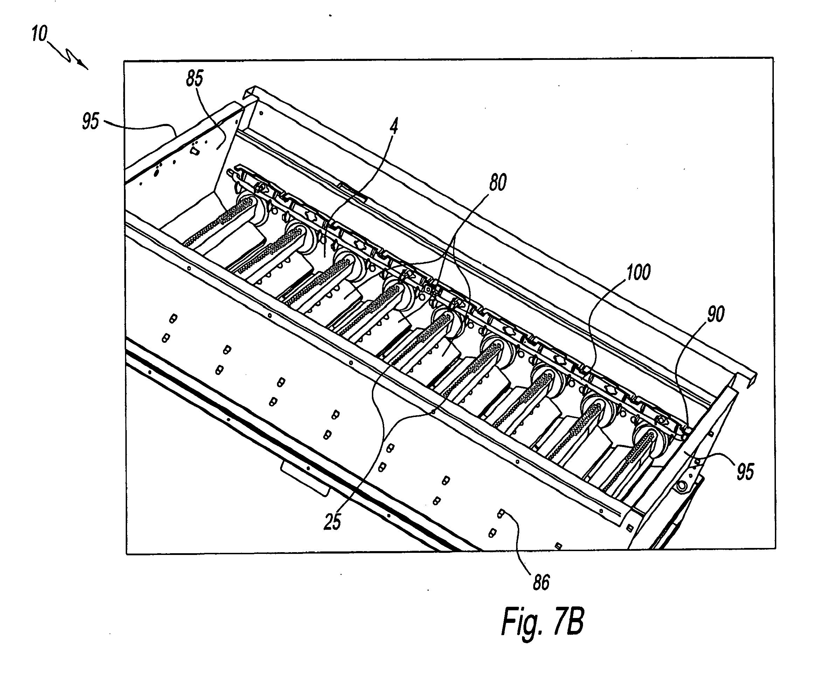

Referring to Figs. 1, 2, a plurality of burners 25 are shown and in Fig. 3 and Fig. 7, char-broiler 10 is shown with grates 20 and radiants 70 removed for purposes of clarity. Each of the plurality of burners 25 is operatively associated with either manifold 30 or manifold 35. Manifold 30 and manifold 35 each are operatively connected to a valve 71 and 75, respectively, via piping. In second embodiment shown in Fig. 4, first valves 72, 73 and second valves 74, 76 are disposed in series for additional safety.

Each manifold 30 and 35 is associated with a cooking zone 40 and 45. Should an operator wish to operate only those burners associated with a zone 40 of char-broiler 10, then valve 71 associated with those burners is activated to deliver gas through manifold 30 to operate burners, according to the first embodiment of the present invention. According to the second embodiment of the present invention shown in Fig. 4, valves 72 and 74 are associated with zone 40 and valves 73 and 76 are associated with the zone 45.

By having a split manifold configuration, a single side of char-broiler 10 can be used, if desired, to lower the amount of gas fuel consumed. When an operator deactivates one-half the plurality of burners 25 using an electrical switch 41 or 46, and electrical gas valve, or a manual gas valve, gas consumption is reduced without changing the adjustment of gas to each individual burner. Electrical switch 41 is operatively associated with manifold 30, valve 71 and ignition control 60. Similarly, switch 46 is operatively associated with manifold 35, valve 75, and ignition control 65. This level of control permits more consistent cooking operation throughout the day without manual adjustment and the introduction of human error. The split manifold configuration permits reduced energy consumption during slower periods of cooking without having to throttle gas input to part of the char-broiler.

On units that are 24" or wider, the fuel delivery system is split to allow operation of one half of the broiler oven during slow periods of cooking operations. The available char-broiler has multiple sizes including widths such as 24", 36", 48", 60" and 72". Char-broilers 10 that are 24 inches or 36 inches in width may have either a single manifold or two manifolds. Wider char-broilers from 48 inches to 72 inches wide have two manifolds. The three configurations of char-broilers have separate controls to individually operate each half of char-broiler.

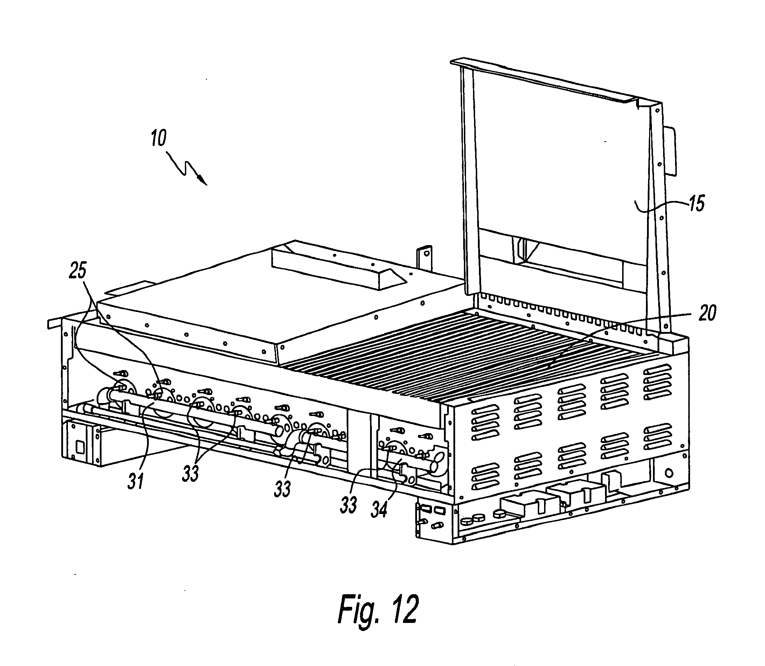

Fig. 1 and Fig. 12 show two different manifold configurations. Fig. 1 has fixed non-adjustable gas injectors at manifolds 30 and 35. Fig. 12 shows manually adjustable gas injectors 33 associated with each of plurality of burners 25 for respective manifolds 31 and 36. The two different manifold configurations permit the customer the flexibility to either not allow an operator to make any adjustments when manifolds in Fig. 1 or to allow fine adjustment of the grate temperature above each burner 25.

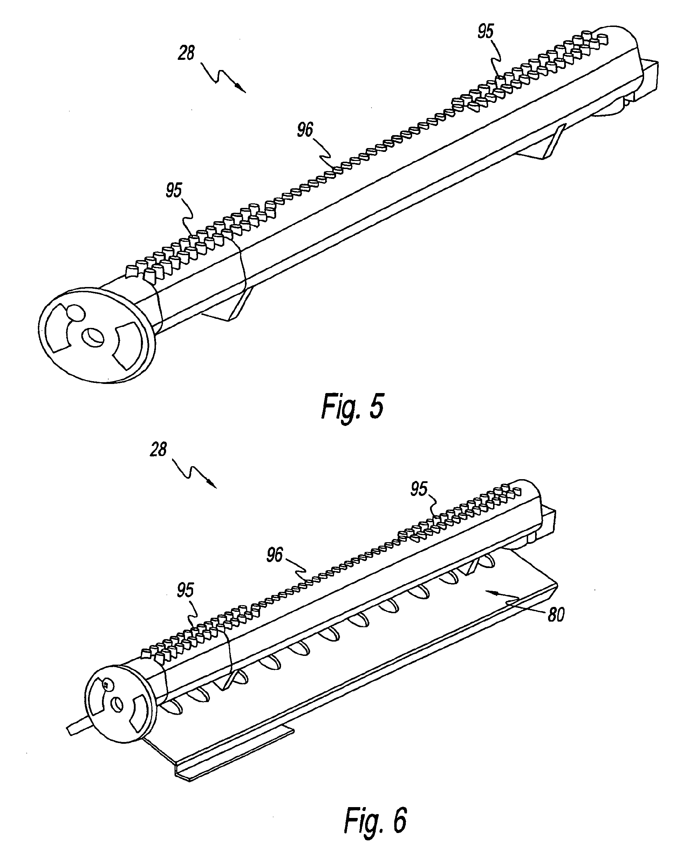

Referring to first embodiment of the present invention, Figs. 3, 6, 7a, and 8a between each adjacent burner 28 is a one of a plurality of combustion air control panels 80. Control panels 80 are secondary air controls that control the amount and location of the ingress room temperature air for combustion and limit the mixing of air. Panels 80 limit the mixing of room temperature air from beneath burners plurality of burners 25 and the hot air above burners 25 thereby reducing the amount of gas required to maintain a grate temperature for cooking. Control panels 80 are removable to the bottom of a burner 25 for ease of cleaning.

Further, regarding Fig. 7a and 7b, side panels 85 and 90 and back panel 86 are insulated to limit heat loss from within heating chamber 4 formed by the char-broiler walls. Rear panel 86 adjacent to side panels 85 and 90, also help to contain and direct heat generated by plurality of burners 25 in char-broiler 10. Insulating material 95 is placed to the outside of the oven sides adjacent panels 85, 90 and 86 to limit the loss of heat from within char-broiler to surrounding environment of room. Similarly, insulation 95 is placed in covers 15 to also prevent loss of heat through covers when they are in the closed position. Thus, control panels 80 together with insulated panels 85, 90 and 86 all ensure that heated air is retaining within heated chamber of char-broiler 10.

In the first and second embodiments, adjacent zones 40 and 45 can each be directly controlled using thermostatic controls. Not only can each zone be controlled separately, but also because of the insulation 95 provided to housing 5, heat from a zone does not impact an adjacent zones and lead to inaccurate temperature readings.

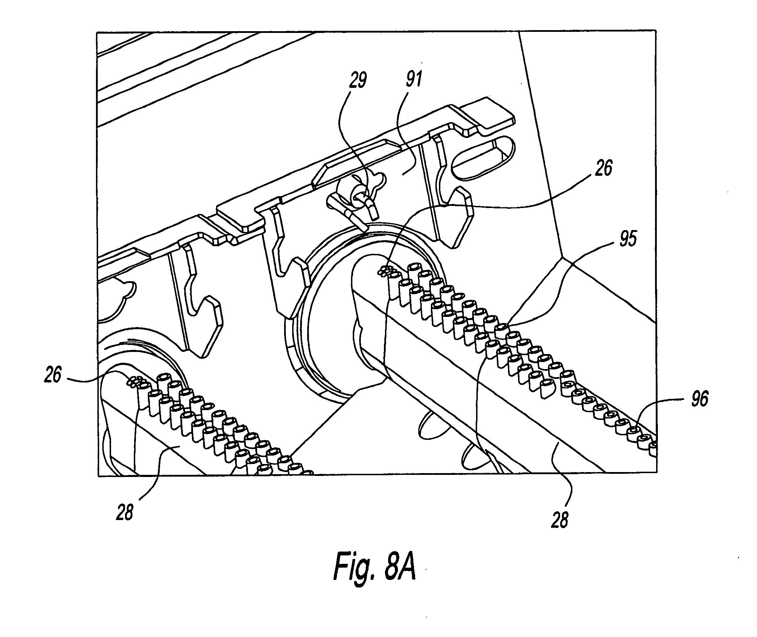

Referring to first embodiment of the present invention and in particular to Figs. 1, 3, 7a and 8a, each valve 71 and 75 is operatively associated with burners in different heating zone 40 or 45 of char-broiler 10. Fig. 8a shows an ignition system 91 having ignition control 60, 65, electrodes 29 that provide spark to ignition ports 26 on burner 28 having main ports 95. Ignition system 91 also has switches 41 and 45 as on/off switches. In Fig. 8a, a burner 28 of the plurality of burners 25 is shown having main burner ports 95 and 96. At the edge of burner 28 are ignition ports 26 that are directly beneath electrodes 29. By providing a spark via electrodes 29, the spark energy is only used to start burner 28 and then is turned off. In traditional char-broilers, a small pilot burner stays on for each main burner on whether char-broiler is on or off throughout a twenty-four hour period. By using electrodes 29, fuel is conserved because electrodes are activated for a very limited period of time to start burner 28, when char-broiler is operational.

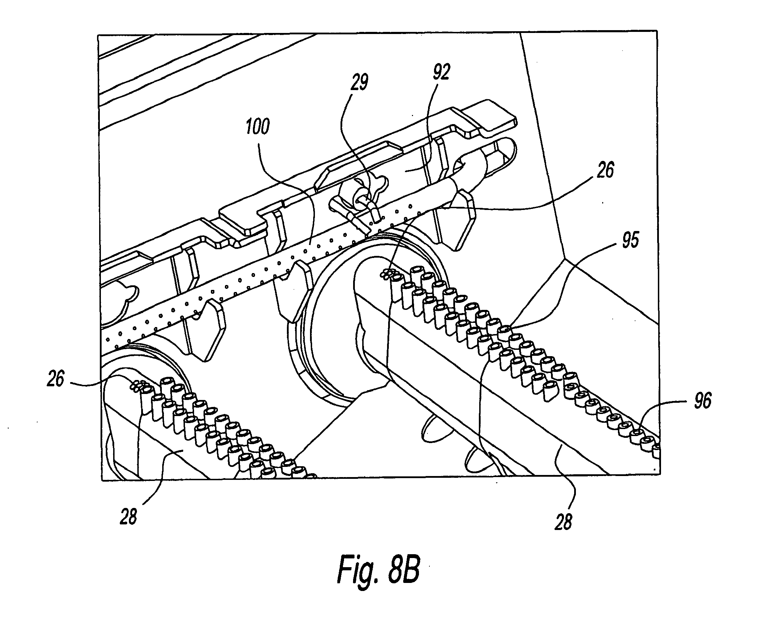

Referring to the second embodiment of the present invention, Figs. 4 and Fig. 7b, and 8b have identical reference numerals as Fig. 1, 3, 7b and 8b above except where noted. Second embodiment has ignition system 92. Fig. 4 additional incorporates valves 72 and 74 in series for manifold 31 and valves 73 and 76 in series for manifold 34. Fig. 7b also has a cross lighting burner 100. Cross lighting burner 100 receives gas supplied by first valve in series 72 or 73 and burners 25 receive gas from second valves 74 and 76 in series. A spark is applied to one end of tube 100 and is tested at other end of tube to ensure lighting. Second valves 74 and 76 supply gas to main burners that are lit by cross lighting tube 100.. Fig. 8b shows electrodes 29 that provide spark to cross lighting burner 100 that then ignites burners 28 having main ports 95.

Ignition system 91 according the first embodiment of the present invention is shown in Figs. 1, 3, 7a and 8a. Ignition system 91 has ignition controls 60, 65 that supplies signals to electrodes 29 to provide sparks to ignition ports 26 at the front of each burner 28 on a continuous basis. In this embodiments, each manifold 30, 35 is associated with an ignition control 60, 65 that provides signals to electrodes 29 to provide sparks for all burners 28 associated with manifold in a zone. In this configuration, gas valves 71, 75 and ignition controls 60, 65 are controlled by on-off power switches 41 and 46, respectively.

In a further configuration, ignition controls 60 and 65 supply a signal to energize sparks to ignition ports 26 via electrodes 29 until flame presence is sensed by ignition controls 60, 65. When ignition controls 60, 65 sense the presence of a flame, the sparking ceases. The ignition controls 60 and 65 are capable of sensing the presence of a flame using a process called flame rectification. If flame is lost, ignition controls 60 and 65 electrodes 29 to provide a spark again until flame is reestablished. Each manifold 30, 35 and each zone 40, 45, has an ignition control 60, 65, respectively, that sends signal to electrodes 29 to supply sparks via electrodes 29 at all the burners for a zone. In this configuration, ignition controls 60 and 65 do not control a respective gas valve 71, 75.

In a further embodiment of configuration of ignition system of Figs. 1, 3, 7a and 8a, electrically powered ignition controls 60, 65 provide signal to electrodes 29 to send sparks to ignition ports 26 at edge of the plurality of burners 25 until a flame presence is sensed through ignition control 60, 65, respectively. Ignition controls 60, 65 stop supplying signals to electrodes 29 when a flame is sensed. In this embodiment, ignition controls 60, 65 each controls a gas valve 71 and 75, respectively, and if flame is not established or lost after being present for a established period of time, gas valve 71, 75 is shut off by ignition control 60, 65, respectively. Each manifold 30, 35 has an ignition control 60, 65, respectively, that sparks at all the burners in a zone 40 and 45. In the present embodiment, ignition controls 60 and 65 and switches 41 and 46, respectively, each control a respective gas valve 71 and 75 and automatically and turn a respective valve off if a flame is not detected after a predetermined length of time. By controlling gas valves 71 and 75, ignition systems 91 provides an added degree of safety to ensure that excess gas is not released in room housing char-broiler 10.

In Fig. 1, 4 and 8b, a second embodiment of the ignition system 92 is shown. Ignition system 92 according to the second embodiment has similar elements as the first embodiment except where noted. Ignition system 92 includes switches 41 and 46, ignition controls 60 and 65 and electrodes 29. Ignition system 92 according to the second embodiment also includes a cross lighting burner 100, electric valves 71 and 72 in series for manifold 31 and valves a second cross-lighting burner 100, electric valves 73 and 74 in series for manifold 34. Each set of burners associated with particular switch 41 and 46 can be separately operated. In the present embodiment, ignition control 65 is controlled by either a power switch or a thermostat 50 (or 55) and controls two valves 73 and 76 in series. Gas supplied by valve 73 to in cross lighting burner 100 is ignited at one end and flame presence is sensed at the opposite end of burner 100 by ignition system 65. Then second valve 76, in series with first valve 73, supplies gas to main burners 28 that are then lit by cross lighting burner 100. Cross lighting burners 100 ensure continuous burner ignition source for plurality of burners 25 associated with a particular manifold 30 or 35 and series of valves 72 and 74 or 73 and 76.

Alternatively, also referring to Fig. 1, 4 and 8b, a power switch 46, activates an ignition control 65 that opens a first valve 73 in a series of two valves and provides gas and ignition to a cross lighting burner 100 associated with manifold 35. Ignition control 65 separately monitors the presence of a flame on cross lighting burner 100 and controls the operation of valve 73 controlling the gas supply. Ignition control 65 provides power to thermostat 55 that controls the state of second valve 76 to control gas to the main heating burners 28 to maintain preset thermostat set point. In this configuration ignition control 65 controls operation of second valve 76.

In a further configuration again referencing Figs. 1, 4 and 8b, power 41 switch turns on thermostat 50 that provides power to an ignition control 60 that opens first valve 72 in a series of two valves and provides gas and spark to cross lighting burner 100. Ignition control 60 monitors the presence of flame on cross lighting burner 100, and opens second valve 74 to provide gas to the main heating burners 28 that are lit by burner 100. When the thermostat set temperature is achieved, ignition controls 60 and both gas valves 72 and 74 are shut off, and re-powered when additional heat is required to maintain grate temperature. In this configuration, thermostat 50 provides power to ignition controls 60 and 65.

The ignition systems 91 and 92 for the first and second embodiments can be configured to enable several embodiments for controlling the operation of the gas valves in the presence of a flame or a predetermined thermostat temperature set point. Ignition systems 91 and 92 are thus able to control the amount of fuel that is consumed. Additionally, thermostats 50, 55 can be used to control the amount of fuel that is used by only activating the ignition control 60, 65 and gas valves when they are needed for added safety.

Referring to Figs. 3a, 4, 5, 6 and 8, an individual main burner 28 is shown. Main burner 28 has a plurality of ports 95 and 96 thereon along a longitudinal axis of burner 28 to release the heated air to cook the food product. Plurality of ports 95 are positioned in at least two rows arranged at outer edges of burner 28. In contrast, burner ports 96 are at the center of burner 28 in a single row along longitudinal axis of burner 28. The distribution of plurality of ports 95 will evenly deliver energy from the front and to the back of plurality of grates surfaces. Additionally, more gas is delivered to the lateral most burners of the plurality of burners 25 to compensate for uneven heating. Typically, char-broiler ovens are hotter at the center of the grate, at burner ports 96, than at the edges thereof. Accordingly, burner ports 95 are patterned in each burner to enhance heat distribution at the edges of grates 20, from right to left and front to back, with the outer most burners delivering higher energy to compensate for heat losses at the perimeter of the oven. Not only are ports 95, 96 distributed to compensate for heating losses at the oven side, but the apertures of ports 95 are also larger to provide more even heat to the food product. Also each port or group of ports has varying sized apertures, further distributing and evening the heat delivery to the grate and food product.

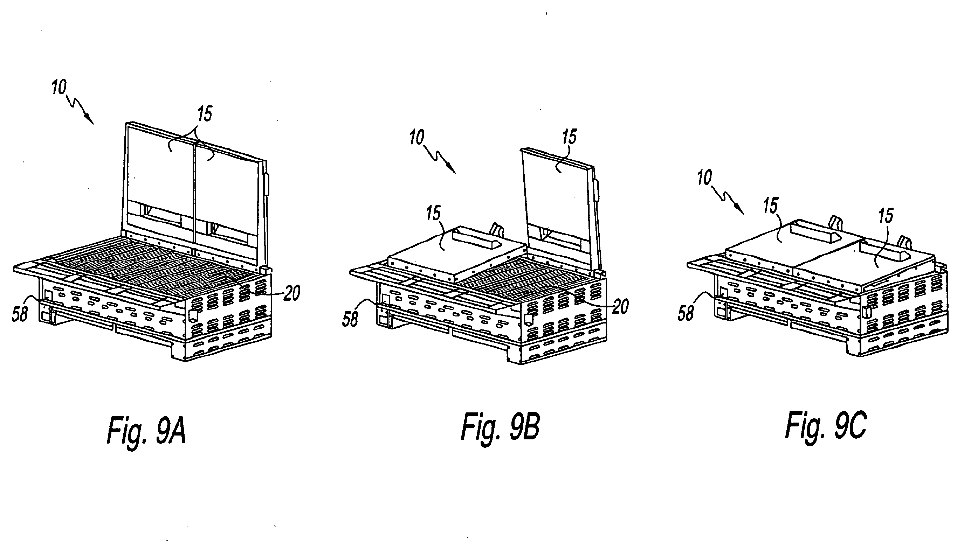

Referring to Figs. 9a through 9c, additional energy savings can be achieved with deployable top grate covers 15. Grate covers 15 require a gas limiting system to prevent temperature run away when covers are down and in the closed position. Such a gas limiting system could incorporate a switch on covers 15 that activate a setback valve 58 to lower the gas supply to the manifold that supplies burners beneath the lowered cover 15. Valve 58 could be positioned at either back or front of housing 4.

A thermostat 50, 55 would sense the temperature and when the temperature beneath the cover 15 became excessive, and valve supplying fuel to manifold for burners under the covered zone could close or partially close until an appropriate temperature was reached within thermostatically set limits. When grates covers 15 are fully down or deployed, as shown in Fig. 9c, energy that would typically escape is held within the char-broiler for a longer period of time. By holding heat within char-broiler 10, as opposed to having the heated air escape when grate covers 15 are opened, the energy required to maintain grate temperature and therefore the amount of gas required to the plurality burners 25 that are covered is reduced. The operator is able to maintain heat on the entire grate surface and use less energy when grate covers 15 are down compared to when the grate surface is exposed because temperature is limited by the size of flue opening at rear of cover 15.

According to the second embodiment of the present invention, other methods of reducing the thermal input to the particular burners can be used. For example, second valves 74 and 76 in series for each manifold 30 and 34, respectively, can be high/low gas valves that would supply a lower level of gas to burners 28 when cover was in the closed configuration.

In addition to using gas limiting valves together with covers 15 that prevent heat from escaping from the cooking surface to minimize energy consumption, thermostats to maintain grate cooking temperature within a desired range could also be used to minimize energy consumption and to maintain desired temperature. Using a thermostat allows user to precisely maintain cooking temperature within a range or a specific cooking temperature. Therefore, the thermostat allows for added precision as well as additional safety. Additionally, a timer circuit that would cycle the gas valve to covered zone. Again, when the temperature beneath deployed cover or covers reached the thermostatically set point or range, the signal to valves would be adjusted accordingly.

When both grate covers are opened, on in a non-deployed position, as shown in Fig. 9a, char-broiler 10 is at full gas input rate. When one grate cover is closed or deployed, as shown in Fig. 9b, the amount of gas expended to heat the grates under the deployed cover is significantly reduced. When both grate covers 15 are deployed as in Fig. 9c, gas consumption is significantly reduced to the most energy efficient state char-broiler 10 can operate as compared to Fig 9a.

In use, having the covers deployed during heating of char-broiler, for example at the beginning of day, the time required to reach cooking temperature and energy consumption are reduced. At the end of the day, covers 15 allow the operator to "burn off" the build up on the grates so they can be more easily cleaned. During the day, when cooking on the unit is not required, covers 15 can be deployed, reducing energy consumption and greatly reducing the radiated heat into the kitchen and increasing comfort for kitchen workers.

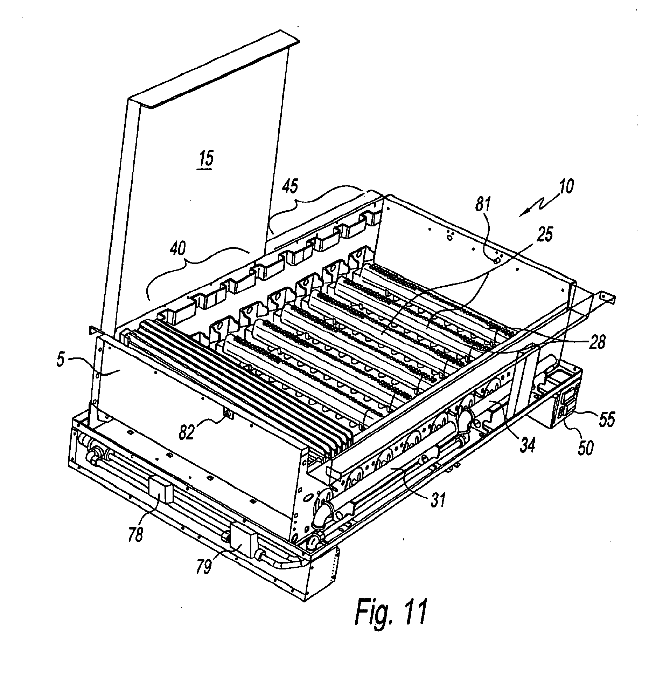

In another embodiment shown in Fig. 11, modulating gas valves 78 and 79 are used in conjunction with sensors 81, 82 deployed in zones 40 and 45. By using modulating valves 78, 79, the supply of gas need not be turned completely off. In contrast, input from sensors 81, 82 would ensure that the appropriate supply of gas would be supplied to burners 28 to maintain desired temperature in conjunction with thermostats 50, 55. Modulating gas valve 78 and 79 can be employed to regulate the gas flow to each manifold associated with each zone. When cover 15 is deployed, heat is more effectively contained in housing 5, reducing heat loss, and allowing modulating valves 78, 79 to restrict flow of gas to manifolds 30, 35. Also, when cover 15 is deployed, and thermostat is set to a lower setting, modulating gas control reduce gas supply to maintain temperature setting or bring temperature to set point or temperature range set on thermostat.

In a preferred embodiment, thermostatically controlled zones 40 and 45 have a high degree of temperature fidelity/accuracy to control the flow of gas to the zone that is covered or open. In such a configuration, thermostatic controls 50 and 55 of Fig. 1 can be adjusted according to the required temperature for the food to be cooked. Moreover, adjacent zones 40 and 45 can be operated and adjusted independently of each other. Thus the grate temperature can be adjusted up or down for different foods and then changed back with greater accuracy to eliminate any guessing and/or mutable tuning adjustments to return grate temperatures to a different setting. Covers 15 together with the thermostats allow the operator to save energy and reduce heat gain to the room while still maintaining the grate at cooking temperatures. Further, covers 15 are insulated and have a small opening for heat to leave near the rear of the cover. When covers 15 are down, radiation from the grates is almost eliminated and heat escape from the covers is away from personnel.

The present invention having been thus described with particular reference to the preferred forms thereof, it will be obvious that various changes and modifications may be made therein without departing from the scope of the present invention as defined in the appended claims.

## Claims

1. An energy saving char-broiler for cooking a food product comprising:
a housing (5);
a plurality of burners (25) disposed within said housing (6), said plurality of burners (25) defining a cooking zone (40, 45);
at least one grate (20) disposed in said cooking zone (40, 45) having a cooking
surface;
a manifold (30,35) and at least one valve (71, 75, 74, 76) associated with said plurality of burners (25) in said cooking zone (40, 45), wherein said at least one valve (71, 75, 74, 76) is adapted to deliver a gas flow through said manifold (30, 35) to operate said plurality of burners (25) and
at least one cover (15) that when in a fully down or deployed position covers said grate (20) and said plurality of burners (25) in said cooking zone (40, 45), thereby preventing heat from escaping from said cooking surface to minimize energy consumption.
wherein a thermostat control (50,55) is adapted to control said at least one valve (71, 75, 74, 76) to regulate said gas flow to maintain a preset thermostat set point, and said thermostat control (50.55) is adapted to maintain said gas flow at a high rate when said cover is open and at significantly lower rate when said cover is deployed.

2. The char-broiler of claim 1, wherein said preset thermostat temperature set point is within thermostatically set limits.

3. The char-broiler of claim 1, further comprising a second thermostat (55), a second plurality of burners (25) disposed in said housing, a second manifold (35) in fluid communication with said second plurality of burners (25), and a second cover, wherein said second plurality of burners (25) define a second cooking zone in said housing (5), and wherein said second plurality of burners (25) is supplied gas by said second manifold (35) and at least one valve (75).

## Patentansprüche

1. Energiesparender Grill zum Zubereiten eines Nahrungsmittelprodukts, umfassend:
ein Gehäuse (5),
eine Mehrzahl von Brennern (25), die in dem Gehäuse (5) untergebracht sind, wobei die Mehrzahl von Brennern (25) eine Kochzone (40, 45) bildet,
mindestens einen in der Kochzone (40, 45) befindlichen Gitterrost (20) mit einer Kochoberfläche,
**gekennzeichnet durch**
einen Verteiler (30, 35) und mindestens ein Ventil (71, 75, 74, 76) in Verbindung mit der Mehrzahl von Brennern (25) in der Kochzone (40, 45), wobei das mindestens eine Ventil (71, 75, 74, 76) dafür ausgelegt ist, eine Gasströmung **durch** den Verteiler (30, 35) für das Betreiben der Mehrzahl von Brennern (25) zuzuführen, und
mindestens eine Abdeckung (15), die in einer vollständig nach unten geführten oder ausgefahrenen Position den Gitterrost (20) und die Mehrzahl von Brennern (25) in der Kochzone (40, 45) abdeckt, wodurch verhindert wird, dass Wärme von der Kochoberfläche entweicht, so dass der Energieverbrauch minimiert wird,
wobei eine Thermostatregelung (50, 55) dafür ausgelegt ist, das mindestens eine Ventil (71, 75, 74, 76) zu regeln, so dass die Gasströmung geregelt und ein zuvor eingestellter Thermostat-Sollwert beibehalten wird, und
die Thermostatregelung (50, 55) dafür ausgelegt ist, die Gasströmung bei einer hohen Rate zu halten, wenn die Abdeckung offen ist, und bei einer erheblich niedrigeren Rate, wenn die Abdeckung nach unten geführt ist.

2. Grill nach Anspruch 1, wobei der zuvor eingestellte Thermostat-Temperatursollwert innerhalb von thermostatisch eingestellten Grenzwerten liegt.

3. Grill nach Anspruch 1, der zudem einen zweiten Thermostat (55), eine in dem Gehäuse untergebrachte zweite Mehrzahl von Brennern (25), einen zweiten Verteiler (35) in Flüssigkeitskommunikation mit der zweiten Mehrzahl von Brennern (25) und eine zweite Abdeckung umfasst, wobei die zweite Mehrzahl von Brennern (25) eine zweite Kochzone in dem Gehäuse (5) bilden und wobei der zweiten Mehrzahl von Brennern (25) Gas durch den zweiten Verteiler (35) und mindestens eine Ventil (75) zugeführt wird.

## Revendications

1. Gril économe en énergie destiné à la cuisson d'un produit alimentaire comprenant :
un boîtier (5) ;
une pluralité de brûleurs (25) disposés à l'intérieur dudit boîtier (5), ladite pluralité de brûleurs (25) définissant une zone de cuisson (40, 45) ;
au moins une grille (20) disposée dans ladite zone de cuisson (40, 45) avec une surface de cuisson ;
**caractérisé par**
un collecteur (30, 35) et au moins une vanne (71, 75, 74, 76) associée à ladite pluralité de brûleurs (25) dans ladite zone de cuisson (40, 45), dans lequel ladite au moins une vanne (71, 75, 74, 76) adaptée pour livrer un débit de gaz par ledit collecteur (30, 35) pour actionner ladite pluralité de brûleurs (25) et
au moins un couvercle (15) qui, lorsqu'il est en position complètement abaissée ou déployée, couvre ladite grille (20) et ladite pluralité de brûleurs (25) dans ladite zone de cuisson (40, 45), empêchant ainsi la chaleur de s'échapper de ladite surface de cuisson pour minimiser la consommation d'énergie,
dans lequel une commande thermostatique (50, 55) est adaptée pour commander ladite au moins une vanne (71, 75, 74, 76) pour réguler ledit débit de gaz pour maintenir un point de réglage de thermostat préréglé, et
ladite commande thermostatique (50, 55) est adaptée pour maintenir ledit débit de gaz à un débit élevé lorsque ledit couvercle est ouvert, et à un débit considérablement inférieur quand ledit couvercle est déployé.

2. Gril selon la revendication 1, dans lequel ledit point de réglage de la température à thermostat préréglé se situe dans les limites du réglage thermostatique.

3. Gril selon la revendication 1, comprenant en outre un second thermostat (55), une seconde pluralité de brûleurs (25) disposés dans ledit boîtier, et un second collecteur (35) en communication fluidique avec ladite seconde pluralité de brûleurs (25), et un second couvercle, dans lequel ladite seconde pluralité de brûleurs (25) définit une seconde zone de cuisson dans ledit boîtier (5), et dans lequel ladite seconde pluralité de brûleurs (25) est approvisionnée en gaz par ledit second collecteur (35) et au moins une vanne (75).
